# EUROPÄISCHE PATENTSCHRIFT

(11) **EP 0 569 351 B1**
(45) Veröffentlichungstag und Bekanntmachung des Hinweises auf die Patenterteilung: **11.01.1995**
(21) Anmeldenummer: 89911772.5
(22) Anmeldetag: 25.10.1989
(51) Int. Cl.: H02J 7/14, H02J 7/16

(54) **BATTERIELADESYSTEM MIT FEHLERANZEIGE**
BATTERY-CHARGING SYSTEM WITH FAULT INDICATOR
CHARGEUR D'ACCUMULATEURS AVEC SIGNALISATION DES DEFAUTS

(30) Priorität: 31.12.1988 DE 3844442
(43) Veröffentlichungstag der Anmeldung: 18.11.1993
(73) Patentinhaber: ROBERT BOSCH GMBH, 64293 Darmstadt (DE)
(72) Erfinder: SCHRAMM, Günter, D-7143 Vaihingen-Enzweihingen (DE); KUHN, Edgar, D-7016 Gerlingen (DE); MITTAG, Rainer, D-7014 Kornwestheim (DE)
(86) Internationale Anmeldenummer: DE8900681
(87) Internationale Veröffentlichungsnummer: WO9007815

(56) Entgegenhaltungen:
- DE-A- 1 538 313
- FR-A- 2 005 600
- FR-A- 2 476 406
- FR-A- 2 479 592
- US-A- 4 755 734

## Beschreibung

### Stand der Technik

Die Erfindung geht aus von einem Batterieladesystem mit einer Fehleranzeige nach der Gattung des Hauptanspruchs. Ein solches Batterieladesystem ist aus der DE-A- 1538313 bekannt. In diesem System ist ebenfalls ein vom Spannungsregler unabhängiges Schaltmittel mit einer Schaltstrecke in Serie mit der Feldwicklung vorgesehen. Bei Auftreten einer Überspannung, z.B. durch einen leitend defekten Reglertransistor, wird die Erregerwicklung durch die Schaltstrecke stromlos und der Generator wird vollständig abgeschaltet.

Batterieladesysteme, in denen einige mögliche Fehler angezeigt werden können und die im Fehlerfall auf eine Notfunktion, beispielsweise auf eine Notregelung geschaltet werden können, sind ebenfalls bereits bekannt. So ist beispielsweise aus der DE-OS 30 06 109 ein Batterieladesystem bekannt, bei dem die zu speisende elektrische Batterie durch einen eine Erregerwicklung und ein Gleichrichtersystem enthaltenden Wechselstromgenerator versorgt wird, wobei ein Halbleiter-Spannungsregler zum Konstanthalten der Generatorspannung eingesetzt wird. Über eine Ladekontrolleinrichtung wird angezeigt, wenn die Generatorspannung einen bestimmten Wert überschreitet oder unterschreitet.

Durch die Anzeige von Fehlern wird der Benutzer rechtzeitig gewarnt. Folgeschäden wie beispielsweise ein Auskochen der Batterie oder ein Ausfall der kompletten elektrischen Anlage des Kraftfahrzeugs, werden dabei vermieden.

Weiterhin ist gemäß dieser Druckschrift vorgesehen, daß bei einer Unterbrechung der Leitung zwischen dem Generator und der Batterie eine Notregelung in Kraft tritt, die ein zu starkes Ansteigen der Generatorausgangsspannung verhindert.

Dieses Batterieladesystem hat jedoch den Nachteil, daß der Fehler "leitend defekter Regler" zwar angezeigt wird, daß jedoch in diesem Fall keine Notregelung stattfinden kann.

### Vorteile der Erfindung

Das erfindungsgemäße Batterieladesystem mit den kennzeichnenden Merkmalen der Ansprüche hat demgegenüber den Vorteil, eine Vielzahl von Fehlern im Batterieladesystem über die Ladekontrolleinrichtung anzuzeigen und gleichzeitig über einen Hilfsregler, der Bestandteil eines Folgeschadenschutzgerätes ist, eine Notregelung zu ermöglichen.

Die Anzeige eines Fehlers erfolgt dabei durch ein Blinken der Ladekontrollampe. Da jedoch gleichzeitig die Zusatz- bzw. Notregelung erfolgt, bleibt dem Benutzer des Kraftfahrzeugs noch Zeit, die nächste Werkstatt aufzusuchen, ohne daß infolge der oder des aufgetretenen Fehlers im Batterieladesystem ein Folgeschaden entstehen kann.

Durch die in den Unteransprüchen aufgeführten Maßnahmen sind vorteilhafte Weiterbildungen und Verbesserungen des im Hauptanspruch angegebenen Batterieladesystems möglich.

### Zeichnung

Ein Ausführungsbeispiel der Erfindung ist in der Zeichnung dargestellt und in der nachfolgenden Beschreibung näher erläutert.

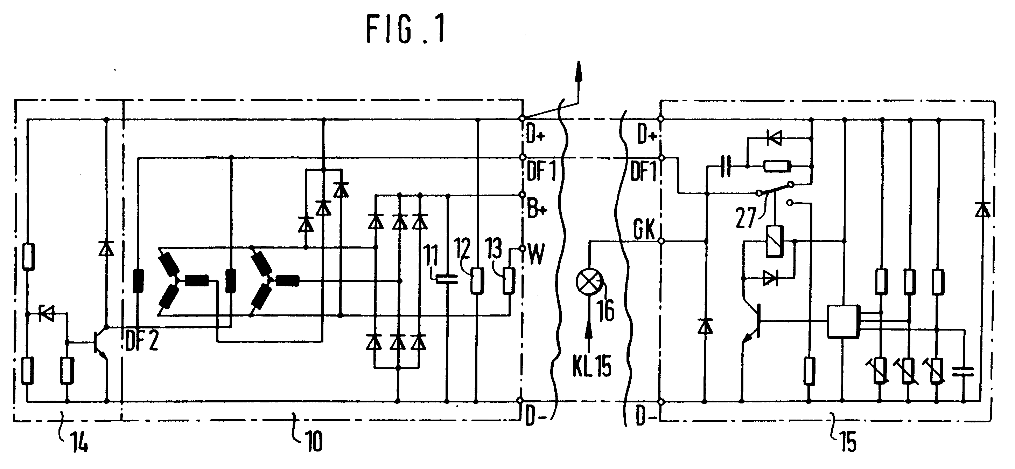

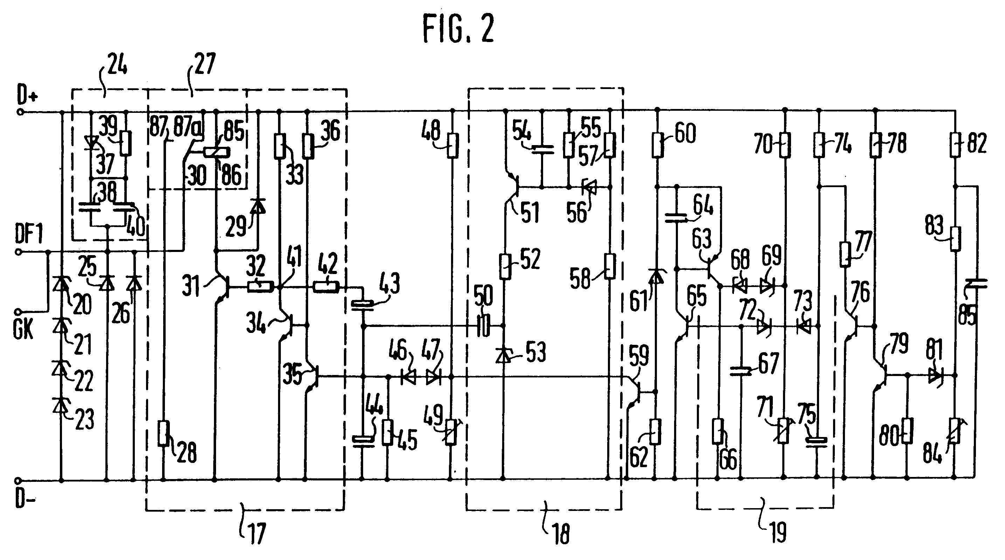

Figur 1 zeigt das Batterieladesystem als Ganzes mit den Anschlußmöglichkeiten des Folgeschadenschutzgerätes und Figur 2 zeigt eine schaltungsgemäße Ausgestaltung des Folgeschadenschutzgerätes.

### Beschreibung des Ausführungsbeispiels

Ein bekanntes Drehstrom-Generator-System 10 wie es in Figur 1 als Doppel-Generator T1-28V110/180A mit sechs Ständer und zwei Feldwicklungen dargestellt ist, weist die Klemmen D+, DF1, B+, W, D- und DF2 auf. Dabei ist zusätzlich zur bekannten Schaltung, auf die hier nicht näher eingegangen werden soll, zwischen die Klemmen B+ und D- ein Kondensator 11, zwischen D+ und D- ein Widerstand 12 und zwischen den Anschluß W des Generators und einen Ausgang der Ständerwicklungen ein Widerstand 13 geschaltet. An das Drehstrom-Generator-System 10 ist über die Klemmen D+, DF2 und D- ein bekannter Spannungsregler 14 zur Regelung der Generatorausgangsspannung angeschlossen.

An die Generatorklemmen D+, DF1 und D- ist über Leitungen das Folgeschadenschutzgerät FSG15 mit den entsprechenden Klemmen D+, DF1 und D- verbunden. Dabei weist das Folgeschadenschutzgerät 15 noch eine weitere Klemme GK auf, an die eine Ladekontrolleuchte 16 angeschlossen wird, die mit einer Klemme KL15 des Generators verbunden ist.

An die Generatorklemme D+ können Zusatzverbraucher angeschlossen werden, die nichtdargestellte Batterie liegt wie allgemein üblich zwischen den Generatorklemmen B+ und D-.

Die detaillierte Schaltunganordnung des Folgeschadenschutzgerätes 15 ist in Figur 2 dargestellt.

Figur 2 zeigt das Folgeschadenschutzgerät mit den Klemmen D+, DF1, GK und D-.

Es weist im wesentlichen drei Baugruppen auf, die jeweils zwischen die Klemmen D+ und D- geschaltet sind, nämlich einen Folgeschadenschutz-Regler 17, einen Impulserzeuger (Pulser) 18 und eine Verzögerungsstufe 19. Darüber hinaus sind weitere Bauelemente vorgesehen, die in der weiteren Beschreibung angegegeben werden.

Zwischen die Anschlußklemmen D+ und D- ist eine Reihenschaltung von vier Zenerdioden 20 bis 23 geschaltet, um eine Spannungsbegrenzung an D+ sicherzustellen Weiterhin ist zwischen die Klemmen D+ und D- die Reihenschaltung einer Baugruppe 24 und einer Diode 25 vorgesehen, wobei parallel zur Diode 25 eine weitere Diode 26 liegt. Dabei sind die Kathoden der Dioden 25 und 26 zusätzlich mit der Klemme DF1 und mit einem Relais 27, das wiederum an D+ liegt, verbunden.

Das Relais 27 weist fünf Kontakte auf, die mit dem Bezugszeichen 30, 86, 85, 87 und 87a bezeichnet sind. Dabei ist die Klemme 87 über einen Widerstand 28 mit D- und Klemme 30 des Relais 27 mit DF1 verbunden. Bei den Bezeichnungen der Klemmen des Relais 27 handelt es sich um allgemein übliche Bezeichnungen. Die Klemme 87a sowie die Klemme 85 des Relais 27 sind mit D+ verbunden während die Klemme 86 über eine Diode 29 sowohl mit D+ als auch über einen Transistor 31 mit D- verbunden ist. Dabei liegt Klemme 86 am Kollektor des Transistors 31, während der Emitter des Transistors 31 mit D- verbunden ist. Die Basis des Transistors 31 ist über einen Widerstand 32 und einen Widerstand 33 mit D+ verbunden und außerdem über einen Transistor 34 mit D-, wobei die Basis des Transistors 34 mit dem Kollektor eines weiteren Transistors 35 verbunden ist, dessen Emitter wiederum mit D- in Verbindung steht. Zwischen die Basis des Transistors 34 und D+ ist ein weiterer Widerstand 36 geschaltet.

Das Relais 27 sowie die Bauelemente 28 bis 36 bilden den Folgeschadenschutz-Regler.

Die Baugruppe 24 enthält eine Reihenschaltung einer Diode 37 und eines Kondensators 38, wobei zu dieser Reihenschaltung eine Reihenschaltung eines Widerstandes 39 und eines Kondensators 40 derart geschaltet ist, daß die Kathode der Diode 37 mit den Verbindungspunkt zwischen dem Widerstand 39 und dem Kondensator 40 liegt.

Der Folgeschadenschutzregler 17 ist mit seinem Verbindungspunkt 41 zwischen den Widerstand 32 und den Kollektor des Transistors 34 gelegt und über eine Reihenschaltung eines Widerstandes 42, eines Kondensators 43 und eines weiteren Kondensators 44 mit D- verbunden. Dabei liegt parallel zum Kondensator 44 ein Widerstand 45. Die Basis des Transistors 35 ist über eine Reihenschaltung einer Diode 46 und einer Zenerdiode 47 mit dem Mittelabgriff eines Spannungsteilers 48, 49 verbunden, wobei der Widerstand 49 variabel ist und die Reihenschaltung von 46 und 47 so erfolgt, daß jeweils die Anoden miteinander verbunden sind.

Weiterhin ist die Basis des Transistors 35 über die Serienschaltung der Dioden 46, 47 mit einer Reihenschaltung eines Transistors 51, eines Widerstandes 52 und einer Zenerdiode 53, die ihrerseits wiederum zwischen den Klemmen D+ und D- liegen, verbunden, wobei ein weiterer Kondensator 50 zwischen die Kathode der Zenerdiode 53 und einem Verbindungspunkt zwischen den Kondensatoren 43, 44 angeschlossen ist.

Parallel zum Basis-Emitter-Kreis des Transistors 51 liegt ein Kondensator 54, ein Widerstand 55 und die Reihenschaltung einer Zenerdiode 56 und eines Widerstandes 57 geschaltet, wobei der Verbindungspunkt zischen dem Widerstand 57 und der Zenerdiode 56 über einen Widerstand 58 an D- angeschlossen ist.

Dabei bilden die Bauelemente 48 bis 58 den Pulser 18.

An den Spannungsteiler 48, 49 ist der Kollektor eines weiteren Transistors 59 angeschlossen, der Emitter dieses Transistors ist mit D- verbunden, die Basis mit einer Reiheschaltung eines Widerstandes 60, einer Zenerdiode 61 und eines Widerstandes 62, wobei diese Reihenschaltung wiederum zwischen D+ und D- liegt. An den Verbindungspunkt zwischen dem Widerstand 60 und der Zenerdiode 61 ist ein Transistor 63 geschaltet, in dessen Basis-Emitter-Kreis ein Kondensator 64 liegt und dessen Kollektor mit der Basis eines weiteren Transistors 65 verbunden ist, dessen Kollektor wiederum mit der Basis des Transistors 63 und dessen Emitter mit D- verbunden ist. Zwischen dem Verbindungspunkt des Kollektors des Transistors 63 und der Basis des Transistors 65 sowie D- liegt eine Parallelschaltung eines Widerstandes 66 und eines Kondensators 67, dieser Verbindungspunkt ist weiterhin über eine Reihenschaltung einer Diode 68 und einer Zenerdiode 69 mit einem zwischen D+ und D- liegenden Spannungsteiler 70, 71 verbunden, wobei der Widerstand 71 veränderbar ist.

Über eine Reihenschaltung einer Zenerdiode 72 und einer Diode 73 ist der Verbindungspunkt weiterhin über einen Widerstand 74 mit D+ und einem Kondensator 75 mit D- verbunden.

Der Kollektor eines weiteren Transistors 76 ist über den Widerstand 77 und den Widerstand 74 an D+ angeschlossen. Die Basis des Transistors 76 ist über den Widerstand 78 ebenfalls mit D+ verbunden. Sie liegt außerdem am Kollektor des Transistors 79 dessen Emitter mit D- verbunden ist.

Die Basis des Transistors 79 ist über den Widerstand 80 direkt mit D- und über die Zenerdiode 81 mit dem Spannungsteiler 82, 83 und 84, der zwischen D+ und D- liegt, verbunden. Parallel zu den Widerständen 83 und 84 liegt ein Glättungskondensator 85. Der Widerstand 84 ist wiederum veränderbar.

Die Widerstände 82, 83 und 84 bzw. 70 und 71 bzw. 48 und 49 bilden drei variable Spannungsteiler, die imfolgenden mit Spannungsteiler 1 bzw. Spannungsteiler 2 bzw. Spannungsteiler 3 bezeichnet werden.

### Funktionsweise des Schutzgeräts (FSG15)

Der Anschluß des Schutzgerätes erfolgt an D+, DF1 und D- des Generators. Die Ladekontrolleuchte, die im Fehlerfall die Anzeige übernimmt, wird am Schutzgerät (Anschluß GK) angeschlossen. Der Strom für die Erregerwicklung fließt von D+Gen nach D+Schutzgerät über den Ruhekontakt des Relais 27, vom Anschluß DF1 des Schutzgerätes zu DF1 Generator. Dieser Anschluß ist mit der Erregerwicklung verbunden. Die andere Seite der Erregerwicklung (DF2) führt zur Endstufe des elektronischen Reglers 14. Der Vorerregerstrom fließt von KL15, über Kontrollampe 16, GK und DF1 zum Generator.

Das Schutzgerät enthält drei unterschiedlich eingestellte Spannungsschwellen, welche die Spannung an D+Gen überwachen, sie werden an den Spannungsteilern 82, 83, 84 bzw. 70, 71 bzw. 48, 49 erzeugt. Mit Hilfe des Schutzgerätes werden folgende Fehlfunktionen des Batterieladesystems erkannt, bei gleichzeitigem Schutz gegenüber diesen Fehlfunktionen:

### 1. Leitend defekter Regler, Begrenzung der Generatorspannung und Fehleranzeige.

Steigt die Spannung an D+ infolge einer Vollerregung des Generators (durch z.B. leitend defekten Regler) an, wird dieser Zustand von dem Spannungsteiler 82, 83, 84 erkannt und über die Zenerdiode 81 wird der Transistor 79 leitend gesteuert. Dadurch wird der Transistor 76 gesperrt und der Kondensator 75 wird über den Widerstand 74 aufgeladen. Hat die Spannung am Kondensator 75 den Wert von U₇₃ + U₇₂ + U_{BE65} erreicht, werden die Transistoren 63 und 65 leitend.

Dieser Schaltzustand von der Transistoren 63 und 65 bleibt erhalten (bis Fahrzeug- bzw. Generatorstillstand durch Ausschalten des Zündschalters). Dadurch geht Transistor 59 vom leitenden in den sperrenden Zustand über und gibt den Spannungsteiler 3 frei. Transistor 35 wird leitend, 34 gesperrt, 31 leitend, das Relais wird erregt und die Verbindung von D+ zum Erregerfeld unterbrochen. Die Generatorspannung an D+ sinkt ab. Gleichzeitig leuchtet die Kontrollampe über Widerstand 28. Wird eine bestimmte Spannung unterschritten, sperrt Transistor 35, Transistor 34 leitet, Transistor 31 sperrt und das Relais fällt wieder ab. Damit schließt der Kontakt 87a/30 und Erregerstrom fließt wieder von D+ über DF1 zum Erregerfeld. Dadurch steigt die Spannung an D+ wieder an, gleichzeitig erlischt die Kontrollampe. Wird eine bestimmte Spannung wieder überschritten zieht, auf gleiche Weise wie zuvor beschrieben, das Relais wieder an. Das Relais übernimmt die Funktion des elektronischen Reglers. Damit ist bei leitend defektem Regler ein Laden der Bordnetzbatterie, bzw. die Spannungsversorgung der Verbraucher gewährleistet. Durch das Blinken der Ladekontrolleuchte wird auf einen Fehler der Stromversorgung im Bordnetz hingewiesen.

Über den Relaiskontakt 87a/30 fließt der Erregerstrom. Durch Schmutz und Oxidation erhöht sich der Übergangswiderstand der Kontakte (Extremfall: Kontaktunterbrechung). Um dies zu verhindern, wird bei jedem Anlaßvorgang des Fahrzeuges das Relais angesteuert und dadurch der Kontakt kurzzeitig mehrmals betätigt (sichtbar am Blinken der Kontrollampe). Dadurch wird eine Kontaktreinigung erreicht.

Der zugehörige Schaltungsteil ist der Pulser 18. Ist die Spannung U₅₆ + U_{BE51} über den Widerstand 57 erreicht, leitet der Transistor 51. Dadurch fließt kurzzeitig Strom zur Basis von Transistor 35. Transistor 35 leitet, Transistor 34 sperrt, Transistor 31 leitet und öffnet den Erregerstromkreis. Die Spannung UD wird kleiner, Transistor 51 sperrt, Transistor 35 sperrt, Transistor 34 leitet, Transistor 31 sperrt und Erregerstrom kann fließen, U_{D+} wird größer, Transistor 51 leitet wieder, Transistor 35 leitet ebenfalls.

Da sich die Remanenz des Generators erhöht, sinkt die Spanung an D+ nach kurzer Zeit nicht mehr unter den mit den Widerständen 57, 58 eingestellten Wert. Transistor 51 bleibt leitend, Kondensator 50 lädt sich auf seinen Endwert auf und entkoppelt die Basis von Transistor 35 von Transistor 51. Die Transistoren 35 und 31 bleiben gesperrt, der elektronische Regler 14 übernimmmt die Regelfunktion der Anlage. Diode 53 begrenzt die Spannung über Kondensator 50.

Damit bei intaktem Regler die hauptsächlich bei Betrieb ohne Batterie auftretenden Spannungsspitzen bzw. die Welligkeit der Generatorspannung nicht die o.a. Schutzfunktion auslösen, ist ein Glättungskondensator 85 vorgesehen.

Um zu vermeiden, daß die Batterie bei leitend defektem Regler überladen wird, darf der Ansprechwert der Spannung (an D+) für das Auslösen der Schutzfunktion bei leitend defektem Regler nur wenig über der normalen Regelspannung liegen. Der Kondensator 85 ist aber vor Eintreten des Fehlerfalles schon auf eine relativ hohe Spannung aufgeladen. Damit nun bei den obengenannten Spannungsspitzen kein Ansprechen erfolgt, müßte ein relativ großer und dadurch wegen der erforderlichen Spannungsfestigkeit sehr teurer Kondensator eingesetzt werden.

Durch eine zusätzliche Verzögerungsstufe 19 kann die Größe von Kondensator 85 kleingehalten werden.

Falls durch Spannungsspitzen Transistor 79 leitend und Transistor 76 nichtleitend würden, müßte zusätzlich Kondensator 75 über Widerstand 74 auf die relativ hohen Spannung der Zenerdiode 72 aufgeladen werden, bevor die Schutzfunktion ausgelöst würde. Die Schaltung muß so dimensioniert werden, daß die Zeit der kurzzeitigen Überspannungen kleiner ist als die Zeit, die der Kondensator 75 bis zum Erreichen der Zenerspannung von Zenerdiode 72 benötigt.

Vorteilhaft ist, daß nach dem Abklingen der Spannungsspitzen der Kondensator 75 über Widerstand 77 und Transistor 76 wieder rasch entladen wird, so daß kein Aufsummieren der Spannung an Kondensator 75 durch periodische Spannungsspitzen erfolgen kann.

### 2. Betrieb ohne Batterie - leitend defekter Regler ("Doppelfehler", der kaum auftreten kann).

Bei leitend defektem Regler steigt die Spannung an D+ normalerweise an (abhängig von U_{Gen} und I_{Gen}). Wenn die Spannung an D+ < 50 V, wird der "Kontaktregler" (s.Pkt. 1) über den "Folgeschadenschutz" (Spannungsteiler 1) und damit mit einer gewissen Verzögerung eingeschaltet.

Bei U_{D+} > 50 V wird der Kontaktregler praktisch unverzögert über Spannungsteiler 2 eingeschaltet. Durch das unverzögerte Einschalten über Spannungsteiler 2 bei U_{D+} > 50 V ergeben sich Vorteile bei Lastabschaltung ohne Batterie (s.Pkt. 3).

Durch die genannten Maßnahmen erfolgt eine Begrenzung der Generatorspannung und Fehleranzeige.

### 3. Betrieb ohne Batterie bei funktionierendem Regler Anzeige des Betriebszustandes "Betrieb ohne Batterie"

Eine Anzeige von "Betrieb ohne Batterie" und ein Umschalten auf den Kontaktregler erfolgt, wenn die Spannung an U_{D+} > 50 V. Eine Spannungserhöhung an D+ tritt in der Praxis dann auf, wenn Last abgeschaltet wird. Bei Abfall der Hauptleitung Generator-Batterie ergibt sich eine Spannungserhöhung automatisch, da der Ladestrom der Batterie abgeschaltet wird.

Die Anzeige ist also abhängig von der Generatordrehzahl und dem abgeschalteten Strom.

Durch Herabsetzen der Anspruchsschwelle von 50 V könnte die Anzeige "empfindlicher" gemacht werden, dann besteht aber die Gefahr, daß auch bei Betrieb mit Batterie durch kurzzeitige Spannungsspitzen der Kontaktregler und damit die Anzeige eingeschaltet wird.

Wie oben angeführt, erzeugt eine Lastabschaltung ohne Batterie an D+ eine Überspannung, die vom Spannungsteiler 2 erkannt wird. Steigt die Spannung an Widerstand 71 über den Wert von U₆₉ + U₆₈ + U_{BE65} an, werden Transistoren 63 und 65 leitend. Dieser Schaltzustand von der Transistoren 63 und 65 bleibt erhalten (bis Fahrzeug- bzw. Generatorstillstand durch Ausschalten des Zündschalters). Dadurch geht Transistor 59 vom leitenden in den sperrenden Zustand über und gibt den Spannungsteiler 3 frei. Transistor 35 wird leitend, Transistor 34 gesperrt, Transistor 31 leitend, das Relais wird erregt und die Verbindung von D+ zum Erregerfeld unterbrochen. Die Spannung an D+ sinkt ab. Gleichzeitig leuchtet die Kontrollampe 16 über Widerstand 28. Wird eine bestimmte Spannung unterschritten, sperrt Transistor 35, Transistor 34 leitet, Transistor 31 sperrt und das Relais fällt wieder ab. Der Kontakt 87a/30 schließt wieder und der Erregerstrom fließt zum Erregerfeld. Dadurch steigt die Spannung an D+ an (gleichzeitig erlischt die Kontrollampe).

Wird die am Spannungsteiler 3 eingestellte Spannung überschritten, zieht auf gleiche Weise, wie zuvor beschrieben, das Relais wieder an. Das Relais übernimmt die Funktion des elektrischen Reglers.

Abhängig von der Generatordrehzahl und der Höhe des abgeschalteten Laststromes können bis zur Unterbrechung des Erregerstromes (durch den Relaiskontakt) an D+ die bekannten Spannungsspitzen und "harte" Spannungen auftreten.

Da bei Spannungen, die über der Regelspannung des elektronischen Reglers liegen, die Endstufe dieses Reglers gesperrt wird, würden die auftretenden Spannungspitzen den Regler zerstören, falls sie über der maximalen Sperrspannung der Endstufe liegen.

Die Dioden 20 bis 23 begrenzen die maximale Spannung an D+ auf eine zulässigen Wert.

### 4. Betrieb ohne Batterie, Regler i.o.

"Begrenzung" der Überspannung bei Lastabschaltung ohne Batterie

Wie schon in Punkt 3 ausgeführt, werden die bei Lastabschaltung ohne Batterie auftretenden kurzzeitigen Spannungsspitzen durch Zenerdioden 20 bis 23 auf 250 V begrenzt.

Durch die bei Lastabschaltung ohne Batterie ebenfalls entstehende "harte" Spannung können Verbraucher im Fahrzeug zerstört werden. Mit Schutzgerät ergibt sich eine Reduzierung der harten Spannung.

Durch eine Freilaufdiode direkt parallel zum Erregerfeld geschaltet, könnte die Überspannung an D+ auf den Verlauf ohne Schutzgerät reduziert werden. Gleichzeitig würde sich aber auch an B+ wieder der Spannungsverlauf entsprechend ohne Schutsgerät ergeben.

## Patentansprüche

1. Batterieladesystem mit Fehleranzeige, insbesondere für Kraftfahrzeuge, mit einem Generator (10) mit nachgeschaltetem Dioden-Gleichrichtersystem sowie mit Anschlüssen (B+, D-) für wenigstens eine zu ladende Batterie, mit wenigstens einem Anschluß (D+) für Verbraucher, mit einem Spannungsregler (14) zur Regelung der Generatorausgangsspannung und mit einer Ladekontrollampe, wobei dem Generator (10) Mittel zur Fehlererkennung und Anzeige über die Ladekontrollampe (16) und zum Schutz des Batterieladesystems vor Überspannung nachgeschaltet sind, dadurch gekennzeichnet, daß die Mittel zur Fehlererkennung und Anzeige eine weitere Spannungsregeleinrichtung (17) enthalten, die ein vom Spannungsregler (14) unabhängiges Schaltmittel (27) umfaßt, dessen Schaltstrecke in Serie mit der Feldwicklung liegt und die weitere Spannungsregeleinrichtung (17) bei auftretender Überspannung oder bei leitend defektem Spannungsregler (14) die Spannungsregelung mit übernimmt oder übernimmt und eine Spannungsbegrenzung bewirkt.

2. Batterieladesystem nach Anspruch 1, dadurch gekennzeichnet, daß als Mittel zur Fehlererkennung und zum Schutz des Batterieladesystems vor Überspannung ein die Spannungsregeleinrichtung (17) umfassendes Folgeschadenschutzgerät (15) mit den Klemmen (D+, DF, D-) an die Generatorklemmen (D+, DF1, D-) angeschlossen ist.

3. Batterieladesystem nach Anspruch 1 oder 2, dadurch gekennzeichnet, daß die Spannungsregeleinrichtung (17) als Schaltmittel ein Relais (27) enthält.

4. Batterieladesystem nach einem der vorhergehenden Ansprüche, dadurch gekennzeichnet, daß das Folgeschadenschutzgerät (15) wenigstens eine Zenerdiode (20 bis 23) zur Spannungsbegrenzung aufweist, die zwischen den Anschlüssen (D+ und D-) liegt.

5. Batterieladesystem nach einem der vorhergehenden Ansprüche, dadurch gekennzeichnet, daß das Folgeschadenschutzgerät (15) vorzugsweise drei Spannungsteiler (82, 83, 84; 70, 71; 48, 49) aufweist, die jeweils zwischen den Klemmen (D+ und D-) liegen und drei unterschiedlich einstellbare Spannungsschwellen festlegen.

6. Batterieladesystem nach einem der Ansprüche 2 bis 5, dadurch gekennzeichnet, daß das Folgeschadenschutzgerät (15) einen Impulserzeuger (Pulser 18) aufweist, mit dem das Schaltmittel (Relais 28) zur Kontaktreinigung ansteuerbar ist.

7. Batterieladesystem nach einem der vorhergehenden Ansprüche, dadurch gekennzeichnet, daß das Folgeschadenschutzgerät (15) eine Verzögerungsstufe (19) enthält.

8. Batterieladesystem nach einem der vorhergehenden Ansprüche, dadurch gekennzeichnet, daß während der Spannungsregelung durch die Spannungsregeleinrichtung (17) eine Anzeige über die Ladekontrollampe (16) erfolgt.

## Claims

1. Battery charging system with fault indication, particularly for motor vehicles, with a generator (10), with a diode rectifier system mounted downstream, as well as terminals (B+, D-) for at least one battery to be charged, with at least one terminal (D+) for consuming points, with a voltage regulator (14) for the control of the generator output voltage and with a charging control light, with means connected to and downstream of the generator (10) for the recognition of faults and indication by the charging control light (16) and for the protection of the battery charging system from excess voltages, characterised in that the means provided for fault recognition and indication contain a further voltage regulating device (17), which comprises a switching device (27) independent of the voltage regulator (14), the switching path of which is arranged in series with the field coil, and that the further voltage regulating device (17) assists in undertaking or undertakes the voltage control in the event of excess voltage or of a conductively defective voltage regulator and effects a voltage limitation.

2. Battery charging system in accordance with claim 1, characterised in that as a means for the recognition of faults and for the protection of the battery charging system from excess voltages, a fail-safe device (15) cromprising the voltage regulating device (17) with terminals (D+, DF, D-) is connected to the generator terminals (D+, DF1, D-).

3. Battery charging system in accordance with claim 1 or 2, characterised in that the voltage regulating device (17) contains a relay (27) as switching means.

4. Battery charging system in accordance with one of the preceding claims, characterised in that the fail-safe device (15) has located between terminals (D+ and D-) at least one Zener diode (20 to 23) for the limiting of voltage.

5. Battery charging system in accordance with one of the preceding claims, characterised in that the fail-safe device (15) has preferably three voltage dividers (82, 83, 84; 70, 71; 48, 49), which are each located between the terminals (D+ and D-) and determine three different adjustable voltage thresholds.

6. Battery charging system in accordance with one of the claims 2 to 5, characterised in that the fail-safe device (15) has a pulse generator (pulser 18), by means of which the switching means (relay 28) can be activated for contact cleaning.

7. Battery charging system in accordance with one of the preceding claims, characterised in that the fail-safe device (15) comprises a delay stage (19).

8. Battery charging system in accordance with one of the preceding claims, characterised in that there ensues during the voltage regulation by the voltage regulating device (17) an indication through the charging control light (16).

## Revendications

1. Chargeur de batterie à affichage de défauts, notamment pour véhicule automobile, comportant un alternateur (10) suivi d'un système de redresseurs à diodes ainsi que les bornes (B+, D-) pour au moins une batterie à charger, avec au moins un branchement (D-) pour l'utilisateur et un régulateur de tension (14) pour réguler la tension de sortie de l'alternateur et un voyant de contrôle de charge, l'alternateur (10) étant suivi par des moyens de détection de défauts et d'affichage par la lampe de contrôle de charge (16) et pour protéger le chargeur de batterie contre les surtensions, chargeur caractérisé en ce que les moyens de détection et d'affichage de défauts comportent une autre installation de régulation de tension (17) qui comprend un moyen de commutation (27) indépendant du régulateur de tension (14) et dont le circuit de commutation est en série sur l'enroulement de champ et cette autre installation de régulation de tension (17) en cas de surtension ou de régulateur de tension à conduction défaillante (14) assure la régulation de tension ou assure une limitation de tension.

2. Chargeur de batterie selon la revendication 1, caractérisé en ce que le moyen de détection de défauts et de protection du chargeur contre les surtensions est un appareil de protection contre les conséquences des défauts (15) comprenant une installation de régulation de tension (17) avec des bornes D-, DF, D-) reliées aux bornes (D-, DF1, D-) de l'alternateur.

3. Chargeur de batterie selon la revendication 1 ou 2, caractérisé en ce que le régulateur de tension (17) comprend un relais (27) comme moyen de commutation.

4. Chargeur de batterie selon l'une des revendications précédentes, caractérisé en ce que l'appareil de protection (15) comprend au moins une diode Zener (20 - 23) pour limiter la tension, cette diode étant montée entre les bornes (D+ et D-).

5. Chargeur de batterie selon l'une des revendications précédentes, caractérisé en ce que l'appareil de protection (15) comporte de préférence trois diviseurs de tension (82, 83, 84 ; 70, 71 ; 48, 49) montés entre les bornes (D+ et D-) et fixant trois seuils de tension réglables.

6. Chargeur de batterie selon l'une des revendications 2 à 5, caractérisé en ce que l'appareil de protection (15) comprend un générateur d'impulsion (18) qui peut commander le moyen de commutation (relais 28) pour nettoyer les contacts.

7. Chargeur de batterie selon l'une des revendications précédentes, caractérisé en ce que l'appareil de protection (15) comporte un étage de temporisation (19).

8. Chargeur de batterie selon l'une des revendications précédentes, caractérisé en ce que pendant la régulation de la tension par l'installation de régulation de tension (17) il y a un affichage par le voyant de contrôle de charge.
